# EUROPEAN PATENT APPLICATION

(11) **EP 4 489 240 A1**
(43) Date of publication of application: **08.01.2025**
(21) Application number: 24184905.8
(22) Date of filing: 27.06.2024
(51) Int. Cl.: H02G 3/14, H02G 3/18, H02G 3/12

(54) **WIRING DEVICE INSTALLATION ARRANGEMENT WITH ADAPTER CENTER PLATE FOR MODULAR INSTALLATION**

(30) Priority: 04.07.2023 IN 202331044907
(71) Applicant: SCHNEIDER ELECTRIC INDUSTRIES SAS, 92500 Rueil-Malmaison (FR)
(72) Inventor: NAYAK, Gireesh Anant, 560067 Bangalore (IN); THODIYIL, Babish, 560067 Bangalore (IN); RANGARAJ, Sangilirajesh, 641104 Coimbatore (IN); KANI ALAGAR, Aravinda Kannan, 625003 Madurai (IN)
(74) Representative: Lavoix

(57) **Abstract**

The present invention relates to a wiring device installation arrangement (100,200,300,400) for modular installation of an electrical wiring device. The said wiring device installation arrangement (100,200,300,400) comprises a mounting box (102), a fixing frame (104,204,304,404), insert assembly (106,306), an adapter center plate (108, 208, 308, 408) and a cover frame (110, 210, 310, 410). The insert assembly (106,306) removably attached with said fixing frame (104,204,304,404) and housed within said mounting box (102). The adapter center plate (108) comprises a cavity (112 having plurality of profiled attachment portions (114) to receive said electrical wiring device. The wiring device installation arrangement (100,200,300,400) comprises plurality of docking fixtures (116, 216,316,416), whereby said adapter center plate (108, 208, 308, 408) engages with at least one adjacent adapter center plate (108-1) by means of said docking fixtures (116, 216,316,416), for modularity.

## Description

### Field of invention:

The present invention generally relates to installation of wiring devices into wall mounting boxes. More particularly, the present invention relates to modular installation practices by integrating a modular adapter center plate. The invention also finds its utility in converting assembled installation ranges to modular systems.

### Background of the invention:

The installation of wiring devices, such as switches, sockets and outlets, is an important aspect of electrical installations in residential, commercial and industrial settings. Such installation requires proper planning and designing according to the need of the installation site, and careful execution to ensure both safety and functionality. There are wide range of switches, sockets, outlets, and cover frames available in various styles, materials, and colours. The specific applications, voltage ratings and load capacity guide a user in selection of wiring devices and inserts to provide electrical connection to the wiring devices.

The electrical inserts serve as the core component that allows the electrical devices to be powered by said electrical wiring devices. They provide the necessary terminals and clamps to establish electrical connection with the incoming wires of a main power source. Many electrical insert systems follow a modular approach, allowing various type of inserts to be combined with a fixing frame, and having a combination of sockets, switches, USB ports or other wiring devices.

The installation of electrical inserts including fixing frames, and center plates is crucial in providing functionality, support and aesthetic finish to the electrical installation of wiring devices. The center plate helps protect the electrical inserts and wiring connections from physical damage, dust and debris. Therefore, suitable selection of installation technique is required to create electrical system which involves assembly benefits while adhering the safety protocols making them reliable, efficient and safe.

However, in the existing installation practices, assembled installation systems are in use, where the components are not designed to be interchangeable or customizable. In this context, the assembled or non-modular ranges of installation consist of pre-configured electrical devices and components that are typically standardized and come in fixed configuration. In one particular example, the fixing frame, generally made of metal is combined with the electrical inserts. This assembly is screwed on a wall mounting box and a center plate is further screwed with it from the front side.

Thus, the installer has to work with the pre-configured combinations and configurations provided by the manufacturer. This can be challenging when specific layout requirement has to be meet or when one of the components has to be replaced. The existing system is not cost effective in terms of replacement of broken or worn-out components, as it may involve replacing the entire assembly. Further, non-modular ranges can pose difficulties when modifications or upgrades of electrical system is required. Disadvantageously the existing installation ranges do not offer the flexibility to mix and match different modules or to customize the layout or functionality of the electrical system.

Therefore, the drawbacks present in the conventional wiring device installation arrangement and practices include:
- Unavailability of common solutions for modular and assembled range installation;
- Unavailability of common inserts which results in increased development time;
- Unavailability of docking system for modular and assembled range installation systems;
- High design and development cost for different fixing frames;
- Difficulty due to projection of screw heads that results in installation difficulties;
- Unavailability of customizable flat form available for different architectures;
- Unavailability of simple center pate solution with clip wear out feature.

With a view therefore to overcome the drawbacks associated with conventional wiring device installation arrangement and practices, the inventors devised a novel wiring device installation arrangement for modular installation of an electrical wiring device. The present invention proposes an adapter center plate comprising- plurality of docking fixtures those having profiled edges to be removably engaged with an adjacent center plate for modularity. Further, the fixing frame of the wiring device installation arrangement has an outer periphery with plurality of engagement teeth to attach said fixing frame with an adjacent fixing frame as well as said adapter center plate for modularity.

### Objectives of the invention

Accordingly, an objective of the invention is to provide a wiring device installation arrangement for a modular installation of wiring devices with an adapter center plate including snapping feature and docking feature for modular installation of electrical wiring device.

It is another objective to provide a fixing frame having universal slots for incorporating removable clipping feature bringing easy replaceability provisions.

It is yet another objective of the invention to convert an assembled ranged installation assembly to a modular installation assembly.

### Summary of the invention

Accordingly, the present invention provides a wiring device installation arrangement for modular installation of an electrical wiring device, said wiring device installation arrangement comprising:
- a mounting box having openings for allowing electrical wiring,
- a fixing frame removably attached with said mounting box,
- an insert assembly removably attached with said fixing frame and housed within said mounting box,
- an adapter center plate for receiving said electrical wiring device, and
- a cover frame for covering said adapter center plate;

According to one embodiment of the invention, said adapter center plate comprises:
- a cavity to receive said electrical wiring device, and comprising plurality of attachment portions profiled to match with corresponding profile of said electrical wiring device, and
the adapter center plate engages with at least one adjacent adapter center plate by means of docking fixtures for modularity.

According to one embodiment of the invention, said docking fixtures are disposed on the periphery of adapter center plate. Each of the docking fixture is provided with profiled edges to directly engage corresponding docking fixtures of an adjacent adapter center plate. These docking fixtures have mutually complementing profiled edges.

According to one embodiment of the invention, each of said docking fixture comprises pair of rectangular slots to receive corresponding clips of said cover frame; said pair of rectangular slots being disposed in an orthogonal relation with respect to each other.

According to one embodiment of the invention, each of said docking fixture comprises plurality of strengthening ribs extending towards said rectangular slots.

According to further embodiments of the invention, said docking fixtures are disposed on the fixing frame. These docking fixtures are configured to be attached with said profiled edges of said docking fixtures of said adapter center plate for modularity. Further, docking fixtures are formed as engagement teeth to be attached with at least one adjacent fixing frame having corresponding set of docking fixtures with complimentary profile.

According to further embodiments of the invention, said fixing frame comprises:
- an inner periphery for removably engaging said insert assembly,
- an outer periphery, and
- plurality of mounting means to removably engage said cover frame.

According to further embodiments of the invention, said mounting means comprises plurality of resilient snapping lips protruding from a flat surface of said fixing frame.

According to one further embodiment of the invention, said mounting means comprises plurality of mounting clips removably placed within corresponding slots provided on said fixing frame.

According to further embodiments of the invention, said fixing frame comprises a pair of slotted brackets to hold said insert assembly; said slotted brackets being L-shaped angle brackets.

According to one further embodiment of the invention, said insert assembly comprises a pair of oppositely disposed cantilever arms to be engaged with said inner periphery of the fixing frame.

### Brief description of drawings

For better understanding, an illustrative embodiment of the invention will now be described with reference to the accompanying drawings. It will however be appreciated that the embodiment exemplified in the drawings is merely illustrative and not limitative to the scope of the invention, because it is quite possible, indeed often desirable, to introduce a number of variations in the embodiment that have been shown in the drawings. In the accompanying drawings:
Figure 1 depicts an exploded view of wiring device installation arrangement including an adapter center plate, from one side.
Figure 2 depicts a perspective view of the assembled wiring device installation arrangement to be mounted to a wall.
Figure 3 depicts an exploded view of wiring device installation arrangement including an adapter center plate, from another side.
Figures 4A and 4B illustrate a front and a back perspective view of the adapter center plate according to one embodiment of the invention.
Figure 5 depicts an exploded view of wiring device installation arrangement including a fixing frame, from one side.
Figure 6 depicts an exploded view of wiring device installation arrangement including a fixing frame, from another side.
Figures 7A and 7B illustrate a front and a back perspective view of the fixing frame according to another embodiment of the invention.
Figure 8 depicts an exploded view of wiring device installation arrangement including an insert assembly, from one side.
Figure 9 depicts an exploded view of wiring device installation arrangement including an insert assembly, from another side.
Figures 10A and 10B illustrate a front and a back perspective view of the insert assembly in combination with the fixing frame according to a further embodiment of the invention.
Figure 11 depicts an exploded view of wiring device installation arrangement including plurality of mounting members and a fixing frame, from one side.
Figure 12 depicts an exploded view of wiring device installation arrangement including plurality of mounting clips and a fixing frame, from another side.
Figures 13A and 13B illustrate a front and a back perspective view of the plurality of mounting clips in combination with the fixing frame according to yet another embodiment of the invention.
Figures 14 and 15 illustrate the docking of modular adapter center plates and fixing frames for multi-gang installation.

### Detailed description of the invention

In the following, numerous specific details are set forth to provide a thorough description of the preferred embodiment. Those skilled in the art will recognize and appreciate that, despite of the detailed nature of the exemplary embodiment provided here; changes and modifications may be applied to said embodiments without limiting or departing from the generally intended scope. Like numbers refer to like elements throughout.

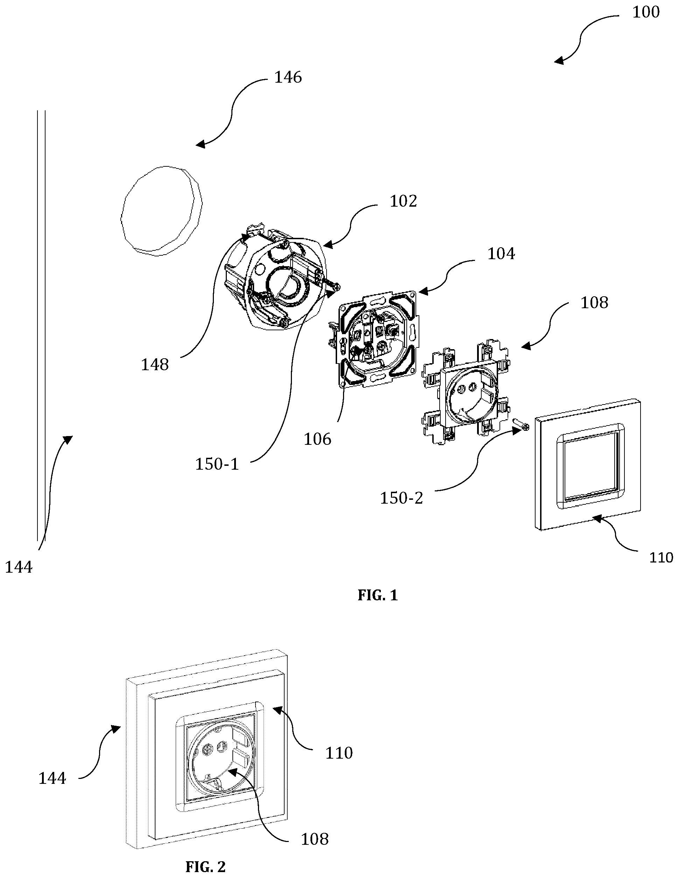

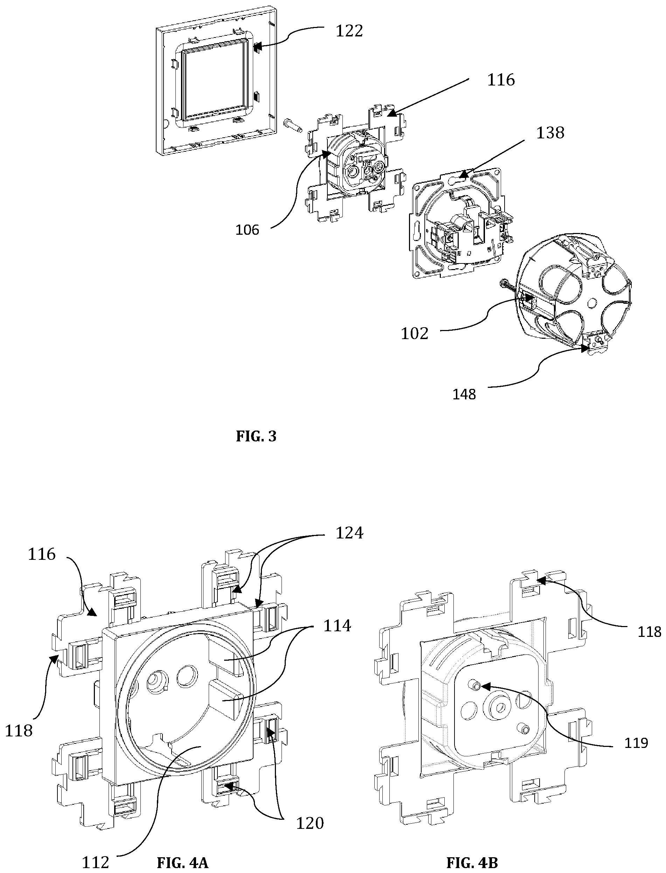

In the accompanying drawings, figures 1 to 4B corresponds to a first embodiment of the invented wiring device installation arrangement (100) for modular installation of an electrical wiring device. The wiring device installation arrangement (100) comprises a mounting box (102), a fixing frame (104), an insert assembly (106), an adapter center plate (108) and a cover frame (110). As illustrated in the exploded view of figures 1 and 3, the mounting box (102) is place within a specified hole (146) in the wall (144). The mounting box (102) houses the components of the wiring device installation arrangement (100), and provides a protective and secure enclosure for the electrical wiring connection and devices.

The mounting box (102) has mounting claws (148) and screw holes on its outer surface and openings for insertion of respective electric wires. The mounting claws (148) ensure a rigid installation in the wall (144). The screw holes facilitate the attachment of the fixing frame (104) with the mounting box (102) using at least a pair of mounting screws (150-1). The fixing frame (104) is further provided with oblong holes (138) for an adjustable attachment. Another set mounting screws (150-2) may be used to connect the adapter center plate (108) with the insert assembly (106). The cover frame (110) covers the adapter center plate (108) from the front and gives an aesthetic appearance to the arrangement, as shown in figure 3.

In the first embodiment, the fixing frame (104) and the insert assembly (106) are fixed together using screw members; and the adapter center plate (108) is received by the fixing frame (104). While the electrical wiring device such as an electrical socket is placed within said adapter center plate (108), the fixing frame (104) acts as a structural support for the electrical components. As depicted in the front side perspective view of figure 4A, the adapter center plate (108) comprises a cavity (112) to receive said electrical wiring device. The cavity (112) corresponds to the shape and size of the electrical wiring device. The side walls of said cavity (112) is provided with plurality of attachment portions (114) profiled to match with corresponding profile of said electrical wiring device. The adapter center plate (108) is further provided with shutter holding feature (119) disposed at other side of the cavity (112).

In this particular embodiment, the adapter center plate (108) is provided with plurality of docking fixtures (116) disposed on its periphery. In a preferable configuration of figures 4A and 4B, two pairs of docking fixtures (116) are disposed on the corners of said adapter center plate (108), extending therefrom. With these docking fixtures (116), the adapter center plate (108) brings in the modularity of docking of the wiring device installation arrangement (100). Further, modularity in the engagement with the cover frame (110) is brought in by introducing plurality of rectangular slots (120) to receive corresponding clips (122) of said cover frame (110). According to one preferred embodiment, each of the docking fixture (116) is provided with one pair of rectangular slots (120). The pair is disposed in an orthogonal manner with respect to each other. The profile of rectangular slots (120) commensurate with that of the corresponding clips (122) of said cover frame (110).

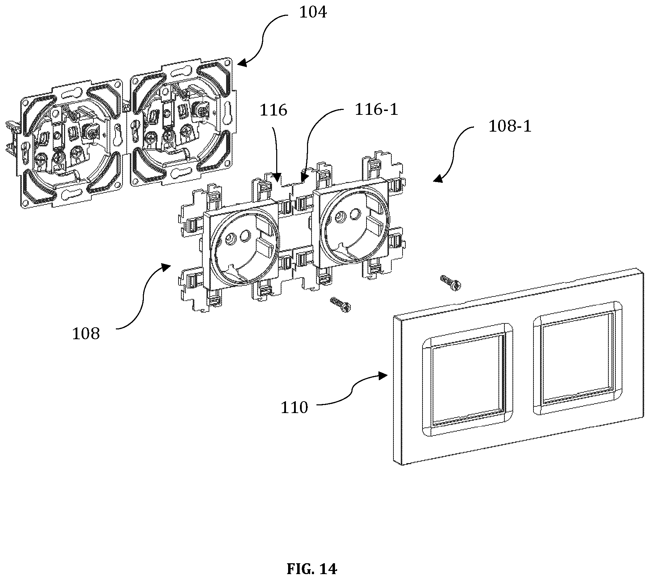

As depicted in figure 4A, the plurality of docking fixtures (116) has profiled edges (118) to be removably engaged with corresponding docking fixture (116-1) of an adjacent adapter center plate (108-1) for modularity. One such modular engagement is shown in figure 14, where a first adapter center plate (108) with engaged with an adjacent adapter center plate (108-1) to form a double gang assembly with their respective the docking fixtures (116,116-1). In this embodiment, the docking fixtures (116) have mutually complementing profiled edges (118); and are directly engaged with each other. Additionally, each of the docking fixture (116) is provided with strengthening ribs (124) disposed along its extension. Preferably, the strengthening ribs (124) are disposed extending towards said rectangular slots (120).

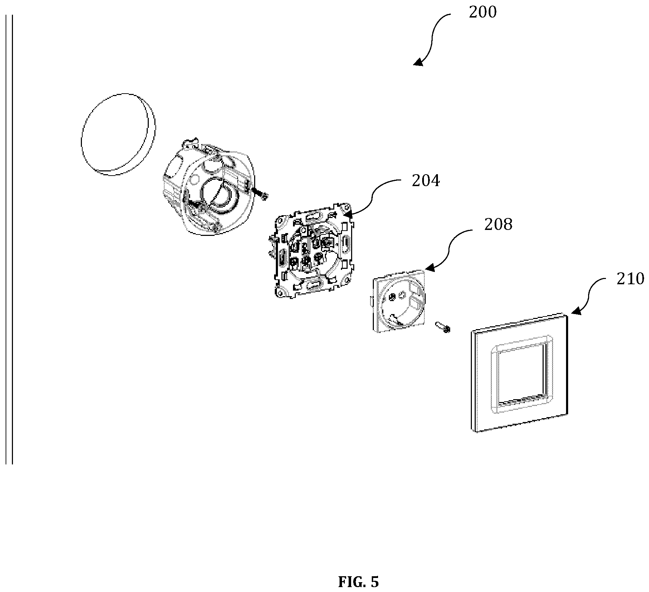

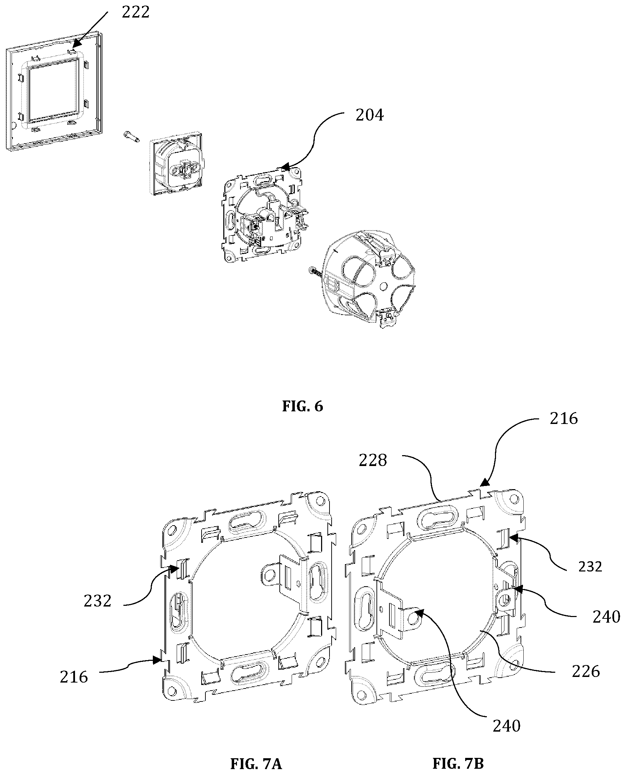

The second embodiment of the invention is shown with figures 5 to 7B of the accompanying drawings. In this embodiment of the wiring device installation arrangement (200), the fixing frame (204) facilitates the modular docking of the components within the installation arrangement. Similar to the first embodiment, the adapter center plate (208) is attached with the insert assembly using mounting screws. Although the functionality of the mounting box (102), and cover frame (210) remains the same, the cover frame (210) is now assembled with said fixing frame (204). As illustrated in the exploded view of figures 5 and 6, the adapter center plate (208) is received within an opening defined by an inner periphery (226) of said fixing frame (204). The insert assembly (106) in the second embodiment is similar to that the first embodiment, is also removably attached with the fixing frame (204). Following this engagement, the electrical wiring device is received by the cavity of the adapter center plate (208).

With reference to figures 7A and 7B, the fixing frame (204) comprises an inner periphery (226), an outer periphery (228), and plurality of mounting means (232). The inner periphery (226) is configured to removably engage said insert assembly (106). The plurality of mounting means (232) are formed at a flat surface between the inner periphery (226) and outer periphery (228), to removably engage said cover frame (210). The mounting means (232), modularity in the engagement with the cover frame (210)

The mounting means, according this this embodiment is plurality of resilient snapping lips (232) those are protruding from said flat surface of said fixing frame (204) to get engaged with the corresponding clips (222) of said cover frame (210). As indicated in the figures, the snapping lips (232) are disposed in a spaced apart manner which corresponds to the positioning of the clips (222). The profile of snapping lips (232) commensurate with that of the corresponding clips (222) of said cover frame (210).

The outer periphery (228) of the fixing frame (204) is formed with plurality of docking fixtures (216). The docking fixtures (216) bring in modularity in engagement of the components or the installation assembly. For example the fixing frame (304) can be attached with an adjacent fixing frame having corresponding set of docking fixtures with complimentary profile. With said docking fixtures (216), the fixing frame (204) can also be engaged with the docking fixtures (116) of the adapter center plate (108) to form a double gang assembly. The fixing frame (204) further comprises a pair of slotted brackets (240) to hold said insert assembly (106). The slotted brackets (240), according to a preferred embodiment, are L-shaped angle brackets. These brackets (240) are extended from the inner periphery (226), and preferably disposed opposite to each other.

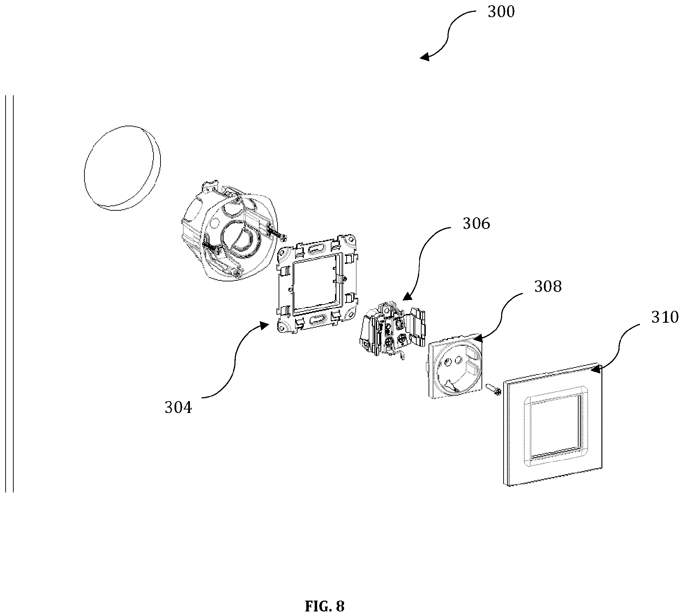

In the third embodiment of the wiring device installation arrangement (300), as shown in figures 8 to 10B, the insert assembly (306) is configured to be snap-fitted with the fixing frame (304). The insert assembly (306) comprises a pair of oppositely disposed cantilever arms (342) extending from the edges of insert assembly (306) to be engaged at said inner periphery (326) of the fixing frame (304). The insert assembly (306) further comprises a pair of terminal holding support (330) to ensure proper alignment, and retention of the terminals associated with the insert assembly (306). The adapter center plate (308) of this embodiment is also received by the fixing frame (304).

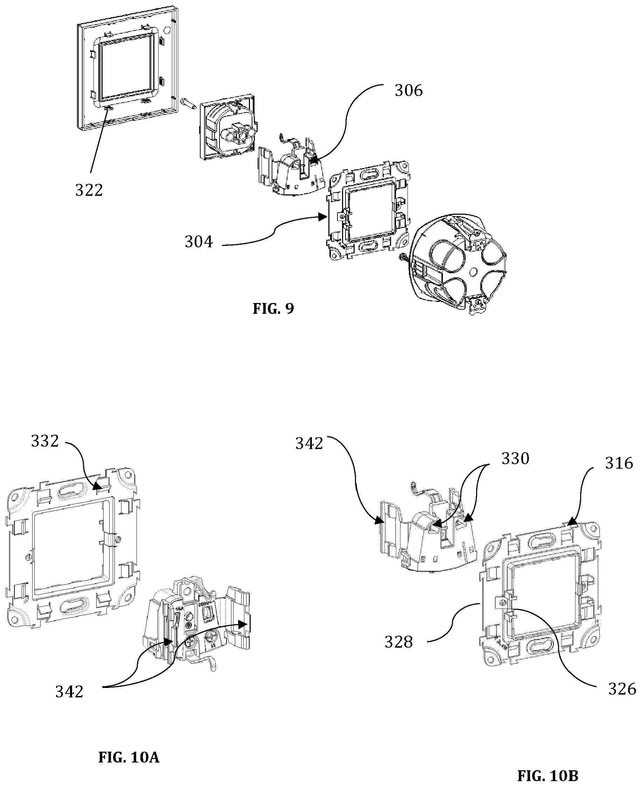

Similar to the second embodiment, in this embodiment, the plurality of mounting means (332) in the form of snapping lips (332) are provided at a flat surface between the inner periphery (326) and outer periphery (328), to removably engage the clips (322) of said cover frame (310) as indicated in figures 9 and 10A. Further, docking fixtures (316) are formed at the outer periphery (328) of the fixing frame (304) to be attached with an adjacent fixing frame and/or adapter center plate (108) and bring modularity.

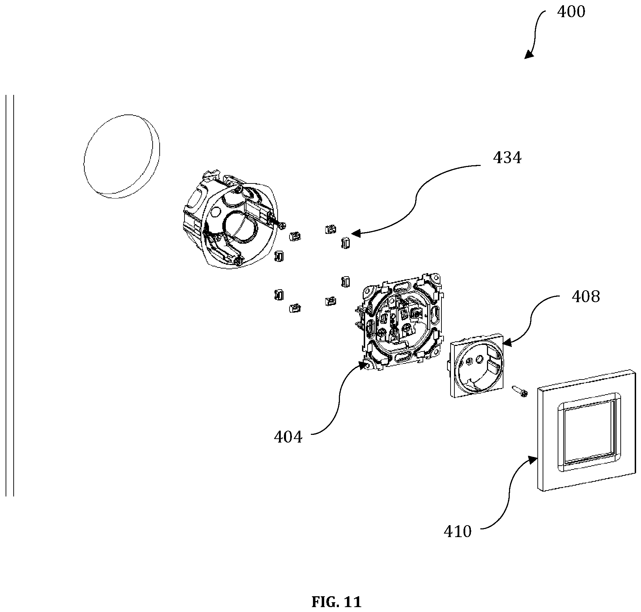

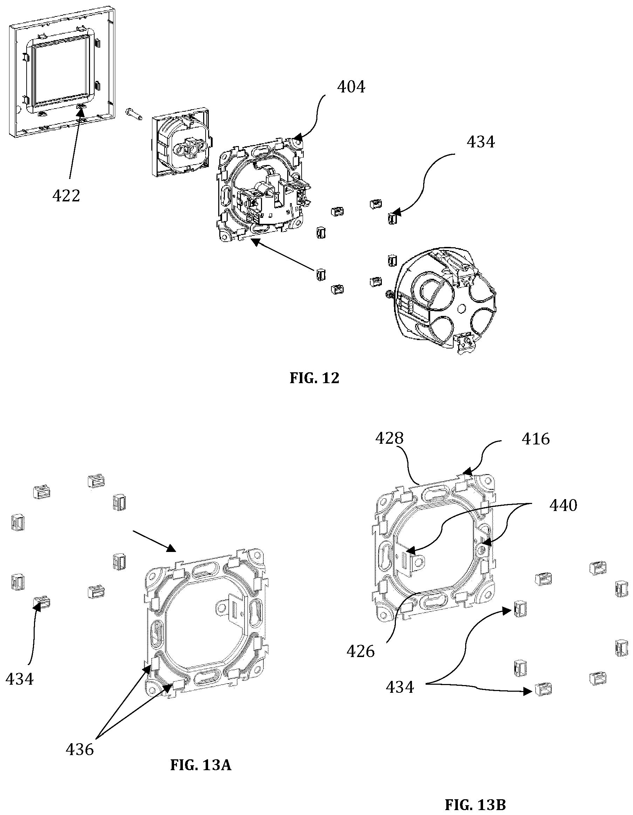

With reference to figures 11 to 13B, a fourth embodiment of the wiring device installation arrangement (400) is shown. This embodiment is directed towards providing replaceable mounting means in the fixing frame (404). The fixing frame (404) is provided with plurality of slots (436) those are formed at said flat surface between the inner periphery (426) and outer periphery (428). The mounting means in this embodiment comprises plurality of mounting clips (434) those are removably placed within corresponding slots (436), as shown in figures 13A and 13B. These mounting clips (434) get engaged with the corresponding clips (422) of said cover frame (410).

The fixing frame (404) further includes a pair of slotted brackets (440) in the form of L-shaped angle brackets to hold said insert assembly. These brackets (440) are extended from the inner periphery (426), and preferably disposed opposite to each other. Similar to the second and third embodiment, in this embodiment, plurality of docking fixtures (416) are formed at the outer periphery (428) of the fixing frame (404) to be attached with an adjacent fixing frame and/or adapter center plate (108) and bring modularity.

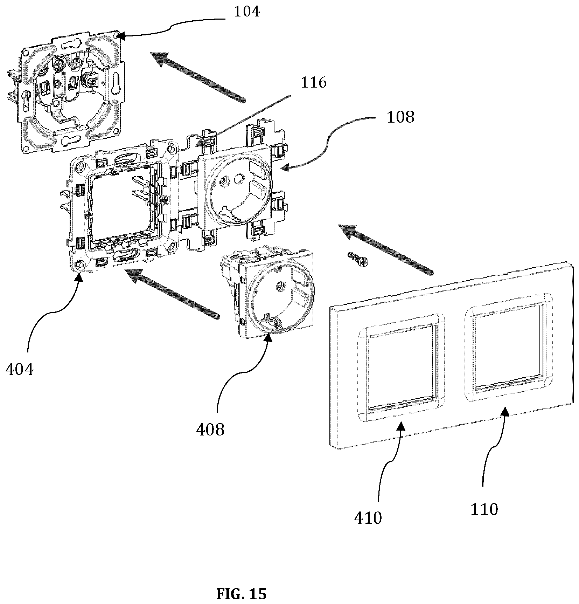

One such variation of modular engagement toward forming a double gang assembly is illustrated in figure 15, where the adapter center plate (408) is first received by the fixing frame (404) and thereupon said fixing frame (404) is docked together with the docking fixture (116) of an adjacent adapter center plate (108). This docking is applicable with all the embodiments of the fixing frame (204,304,404) having said docking fixtures (216,316,416) those get engaged with the profiled edges (118) of the docking fixtures (116).

As already mentioned, the foregoing description is illustrative of the invention and not limitative to its scope, because it will be apparent to persons skilled in the art to devise other alternative embodiments without departing from the broad ambit of the disclosures made herein. **Part-List:**
Wiring device installation arrangement 100, 200, 300, 400
Mounting box 102
Fixing frame 104, 204, 304, 404
Insert assembly 106, 306
Adapter center plate 108, 108-1, 208, 308, 408
Cover frame 110, 210, 310, 410
Cavity 112
Attachment portions 114
Docking fixtures 116,116-1, 216,316,416
Profiled edges 118
Shutter holding feature 119
Rectangular slots 120
Clips (of cover frame) 122, 222, 322, 422
Strengthening ribs 124
Inner periphery 226, 326, 426
Outer periphery 228, 328, 428
Terminal holding support 330
Resilient snapping lips 232, 332
Mounting clips 434
Slots (on fixing frame) 436
Oblong hole 138
Slotted brackets 240, 440
Cantilever arms 342
Wall 144
Hole (in wall) 146
Mounting claws 148
Mounting screws 150-1, 150-2

## Claims

1. A wiring device installation arrangement (100,200,300,400) for modular installation of an electrical wiring device, said wiring device installation arrangement (100,200,300,400) comprising:
- a mounting box (102) having openings for allowing electrical wiring,
- a fixing frame (104,204,304,404) removably attached with said mounting box (102),
- an insert assembly (106,306) removably attached with said fixing frame (104,204,304,404) and housed within said mounting box (102),
- an adapter center plate (108, 208, 308, 408) for receiving said electrical wiring device, and
- a cover frame (110, 210, 310, 410) for covering said adapter center plate (108, 208, 308, 408);
wherein said adapter center plate (108, 208, 308, 408) comprises:
- a cavity (112) to receive said electrical wiring device, and comprising plurality of attachment portions (114) profiled to match with corresponding profile of said electrical wiring device, and wherein said adapter center plate (108, 208, 308, 408) engages with at least one adjacent adapter center plate (108-1) by means of docking fixtures (116,216,316,416) for modularity.

2. The wiring device installation arrangement (100) for a modular installation as claimed in claim 1, wherein said docking fixtures (116) are disposed on the periphery of adapter center plate (108-1), and provided with profiled edges (118) to directly engage with corresponding docking fixtures (116-1) of an adjacent adapter center plate (108-1); said docking fixtures (116, 116-1) having mutually complementing profiled edges.

3. The wiring device installation arrangement (100) for a modular installation as claimed in claim 1 or 2, wherein each of said docking fixture (116) comprises pair of rectangular slots (120) to receive corresponding clips (122) of said cover frame (110); said pair of rectangular slots (120) being disposed in an orthogonal relation with respect to each other.

4. The wiring device installation arrangement (100) for a modular installation as claimed in any one of the claims 1 to 3, wherein each of said docking fixture (116) comprises plurality of strengthening ribs (124) extending towards said rectangular slots (120).

5. The wiring device installation arrangement (200,300,400) for a modular installation as claimed in claim 1, wherein said docking fixtures (216,316,416) are disposed on the fixing frame (204,304,404), and configured to be attached with said profiled edges (118) of said docking fixtures (116) of said adapter center plate (108) for modularity.

6. The wiring device installation arrangement (200,300,400) for a modular installation as claimed in claim 5, wherein said docking fixtures (216,316,416) are formed as engagement teeth to be attached with at least one adjacent fixing frame having corresponding set of docking fixtures with complimentary profile.

7. The wiring device installation arrangement (200,300,400) for modular installation as claimed in claim 5 or 6, wherein said fixing frame (204,304,404) comprises:
- an inner periphery (226, 326, 426) for removably engaging said insert assembly (106,306),
- an outer periphery (228, 328, 428) comprising said docking fixtures (216,316,416), and
- plurality of mounting means (232,332,434) to removably engage said cover frame (210, 310, 410).

8. The wiring device installation arrangement (200,300) for modular installation as claimed in claim 7, wherein said mounting means (232, 332) comprises plurality of resilient snapping lips (232, 332) protruding from a flat surface of said fixing frame (204,304).

9. The wiring device installation arrangement (400) for modular installation as claimed in claim 7, wherein said mounting means (434) comprises plurality of mounting clips (434) removably placed within corresponding slots (436) provided on said fixing frame (404).

10. The wiring device installation arrangement (200,400) for a modular installation as claimed in any one of the claims 5 to 9, wherein said fixing frame (204,404) comprises a pair of slotted brackets (240,440) to hold said insert assembly (106); said slotted brackets (240,440) being L-shaped angle brackets.

11. The wiring device installation arrangement (300) for a modular installation as claimed in any one of the claims 5 to 9, wherein said insert assembly (306) comprises a pair of oppositely disposed cantilever arms (342) to be engaged with said inner periphery (326) of the fixing frame (304).
